# EUROPÄISCHE PATENTSCHRIFT

(11) **EP 1 021 280 B1**
(45) Veröffentlichungstag und Bekanntmachung des Hinweises auf die Patenterteilung: **10.10.2001**
(21) Anmeldenummer: 98961092.8
(22) Anmeldetag: 30.09.1998
(51) Int. Cl.: B25J 15/04, B23Q 1/00

(54) **WECHSELKUPPLUNG**
INTERCHANGEABLE COUPLING
ACCOUPLEMENT INTERCHANGEABLE

(30) Priorität: 10.10.1997 DE 29718726 U
(43) Veröffentlichungstag der Anmeldung: 26.07.2000
(73) Patentinhaber: KUKA Schweissanlagen GmbH, 86165 Augsburg (DE)
(72) Erfinder: KIKUT, Botho, D-86157 Augsburg (DE)
(74) Vertreter: Ernicke, Hans-Dieter, Dipl.-Ing.
(86) Internationale Anmeldenummer: EP9806201
(87) Internationale Veröffentlichungsnummer: WO9919121

(56) Entgegenhaltungen:
- EP-A- 0 092 967
- EP-A- 0 282 417
- EP-A- 0 548 404
- DE-A- 3 347 423

## Beschreibung

Die Erfindung betrifft eine Wechselkupplung zur lösbaren Befestigung von Werkzeugen an Manipulatoren mit den Merkmalen im Oberbegriff des Hauptanspruchs.

Eine solche Wechselkupplung ist aus der DE-A-33 47 423 bekannt. Sie besteht aus zwei Kupplungsteilen, von denen eines den Manipulator und das andere dem Werkzeug zugeordnet ist. Die Kupplungsteile werden mit einer formschlüssigen Verriegelung aneinander befestigt. Diese besitzt mehrere bewegliche Sperrelemente in Form von Kugeln, die von einem kegelförmigen Kolben betätigt werden. Der Kolben schiebt die Kugeln in eine Sperrstellung zwischen zwei korrespondierende Aufnahmeöffnungen an den beiden Kupplungsteilen. In Rückzugstellung erlaubt der Kolben ein Zurückweichen der Kugel in die eine zylindrische Aufnahmeöffnung, wodurch der Sperrschluß gelöst wird und die beiden Kupplungsteile voneinander entfernt werden können. Die andere Aufnahmeöffnung im werkzeugseitigen Kupplungsteil ist als Sacköffnung mit abgerundeter oder konischer Form ausgebildet. Diese Gestaltung der Aufnahmeöffnung ist ungünstig hinsichtlich der sicheren Führung und Kraftübertragung der Sperrkugeln.

Die DD-A5-291 505 zeigt eine ähnliche Wechselkupplung mit einem außenliegenden Kolben, der als Betätigungshülse ausgebildet ist. Hier sind die Aufnahmeöffnungen analog ausgebildet und haben die gleichen Probleme wie beim vorerwähnten Stand der Technik.

Es ist daher Aufgabe der vorliegenden Erfindung, eine bessere Wechselkupplung aufzuzeigen.

Die Erfindung löst diese Aufgabe mit den Merkmalen im Hauptanspruch.
Die Ausbildung der einen, vorzugsweise außenliegenden Aufnahmeöffnung als schräger Kugelkanal hat den Vorteil, daß sich in Verbindung mit der Sperrkugel eine bessere und sicherere Verriegelung der Kupplungsteile ergibt. Die zwischen den Kupplungsteilen überzuleitenden Kräfte werden durch die besser definierte Anlage der Sperrelemente optimal übertragen. Ein unerwünschtes Spiel zwischen den Kupplungsteilen wird vermieden. Außerdem werden Toleranzen und Verschleiß selbsttätig aufgenommen, wobei sich eine Anschrägung am Kolbenmantel durch ihrer Spannfunktion positiv auswirkt.

Ein zylindrischer Kugelkanal hat darüberhinaus den Vorteil, daß sich linienförmige Kontaktstellen ergeben, die eine bessere Führung und Verteilung sowie Übertragung der Spannkräfte mit sich bringen. Die Belastungen und der Verschleiß der Verriegelung werden verringert. Außerdem läßt sich der Kugelkanal leichter und genauer fertigen als eine Sacköffnung. Dies verbessert nicht nur die Funktion, sondern verringert auch den Bauaufwand und die Kosten der Verriegelung.

Die verteilten einzelnen Ausnehmungen am Mantel des Kolbens haben den Vorteil, daß das Sperrelement, insbesondere eine Kugel, größere Wege zwischen Sperr- und Lösestellung zurücklegen kann. Dies ermöglicht eine größere Überdeckung bzw. ein tieferes Eintauchen der Kugel in den beiden Aufnahmeöffnungen bei Sperrstellung. Der Formschluß und die Verriegelung sind dadurch besser und halten größeren Belastungen stand.

Die in Umfangsrichtung distanzierte Anordnung der Ausnehmungen hat Vorteile für die Führungsgenauigkeit des Kolbens. Zwischen den Ausnehmungen bleiben geschlossene Mantelflächen stehen, die eine exakte Führungsfläche bieten.

Für die Zentrierung und Führung der Sperrelemente, insbesondere der Kugeln, ist es vorteilhaft, die Ausnehmungen als sekantenförmige Abflachung am Zylindermantel auszubilden. Die Sperrelemente behalten dadurch eine bessere Führung vom Kolben her, wobei außerdem die Toleranzen für die Drehposition des Kolbens geringer sein können.

Unterhalb der Ausnehmungen können Anschrägungen angeordnet sein, die beim Schließen der Verriegelung eine Spannkraft auf die Sperrelemente in Richtung auf die Aufnahmeöffnungen ausüben.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Wechselkupplung in teilweise geschnittener Darstellung an einem Roboter,
- Figur 2:: die Wechselkupplung im Querschnitt und in Sperrstellung,
- Figur 3:: die Variante zu Figur 2 in Öffnungsstellung,
- Figur 4:: einen Kolben in verschiedenen Ansichten,
- Figur 5:: eine Variante des Kolbens zu Figur 4 in verschiedenen Ansichten,
- Figur 6:: einen abgebrochenen Querschnitt der Wechselkupplung mit einem Kugelkanal in Sperrstellung,
- Figur 7:: die Anordnung von Figur 6 in Öffnungsstellung,
- Figur 8:: eine vergrößerte Detailansicht der Kugel am Kugelkanal in Sperrstellung und
- Figur 9 und 10:: Schnittdarstellungen von Figur 8 entsprechend der Schnittlinien IX-IX und X-X.

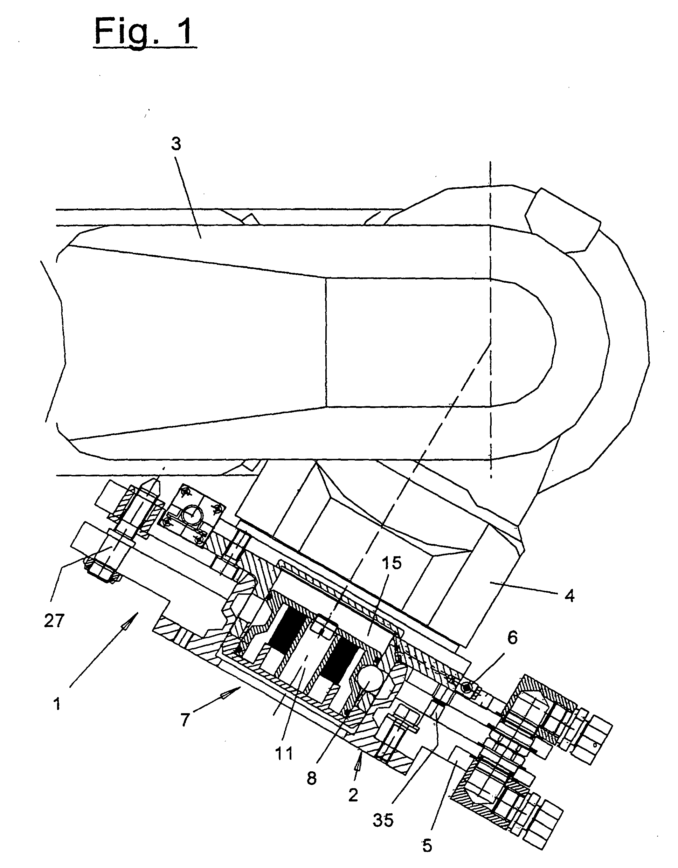

Figur 1 zeigt einen Manipulator (3), der vorzugsweise als mehrachsiger Industrieroboter ausgebildet ist und der an seiner Hand (4) eine Wechselkupplung (1) zur lösbaren Befestigung eines Werkzeugs (2) (nur angedeutet dargestellt) trägt. Die Wechselkupplung (1) weist zwei miteinander zu verbindende Kupplungsteile (5,6) auf, von denen das Kupplungsteil (5) dem Werkzeug (2) und das Kupplungsteil (6) dem Roboter (3) zugeordnet sind. Zur lösbaren Verbindung der Kupplungsteile (5,6) ist eine Verriegelung (7) vorgesehen.

Die beiden Kupplungsteile (5,6) stützen sich bei geschlossener Wechselkupplung (1) über vorzugsweise stiftförmige Positionierkontakte (35) in definierter Lage und mit einem bestimmten Abstand aneinander ab und werden von der geschlossenen Verriegelung (7) in dieser Stellung gehalten und gespannt. Die Positionierkontakte (35) wirken dabei als Anschläge.

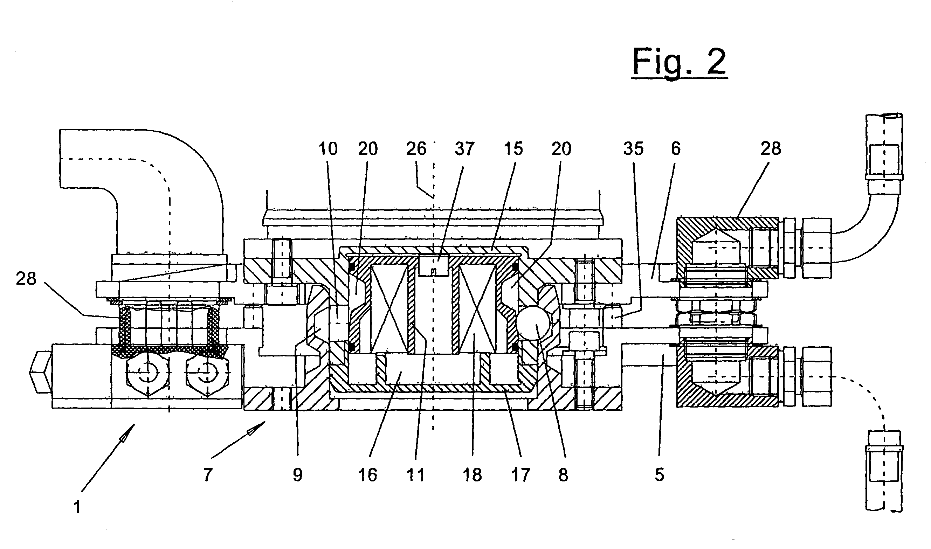

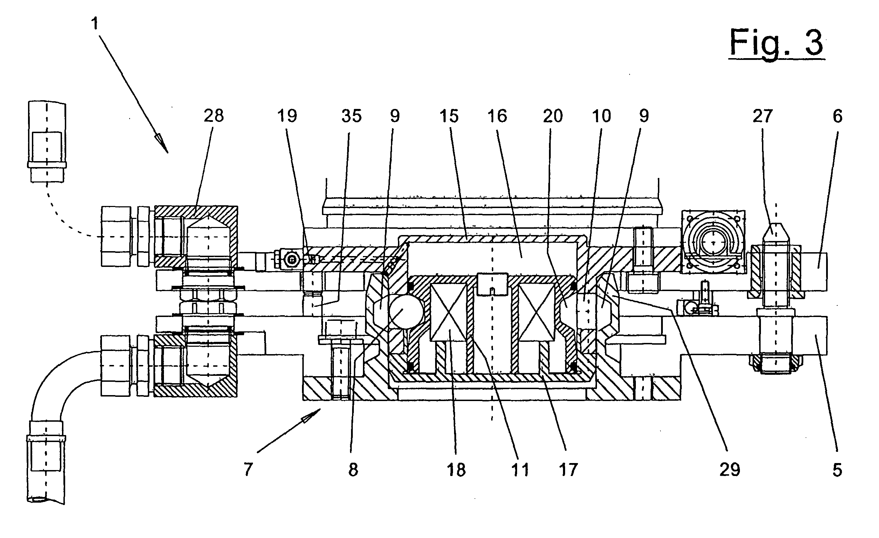

Die Verriegelung (7) ist in Figur 2 und 3 näher dargestellt, wobei Figur 2 die Schließstellung und Figur 3 die Lösestellung zeigt. Die Verriegelung (7) besitzt einen beweglichen Kolben (11), der durch ein Druckmittel, vorzugsweise Druckluft, betätigt wird und sich entlang seiner Kolbenachse (26) vor und zurück bewegen kann. Vorzugsweise ist der Kolben (11) von beiden Seiten mit Druckluft beaufschlagbar. Außerdem kann eine Feder (18) vorhanden sein, die den Kolben (11) bei Ausfall der Druckmittelversorgung in der in Figur 2 gezeigten Sperrstellung hält und eine Notfallsicherung darstellt.

Der Kolben (11) ist in einem Zylinder (15) quer zur Teilungsebene der Kupplungsteile (5,6) beweglich geführt. Der Zylinder (15) wird auf der Roboterseite (3) durch eine Ringkammer (16) am Kupplungsteil (6) gebildet. Auf der gegenüberliegenden Werkzeugseite (2) ist am Kupplungsteil (6) ein im wesentlichen ebenfalls ringförmiger Einsatz (17) vorhanden, der mit der Ringkammer (16) zusammenwirkt und mit dieser gemeinsam den Zylinder (15) als geschlossenen Bewegungsraum für den Kolben (11) bildet.

Der Kolben (11) hat vorzugsweise eine zylindrische Form und ist mit seinem außenliegenden Mantel (12) in dem ebenfalls im Querschnitt kreisrunden Zylinder (15) geführt. Am oberen und unteren Kolbenrand können Ringdichtungen (14) vorhanden sein. Der Kolben kann innenseitig Hohlräume aufweisen.

Die Verriegelung (7) weist ferner mehrere bewegliche Sperrelemente (8) auf, die vorzugsweise als Kugeln ausgebildet sind und vom Kolben (11) betätigt werden. Die Kugeln (8) werden jeweils zwischen zwei Aufnahmeöffnungen (9,10) hin und her geschoben, wobei sie je nach Überdeckungsgrad sperren oder öffnen. In der gezeigten Ausführungsform übergreift das werkzeugseitige Kupplungsteil (5) mit einem ringförmigen Flansch (29) außenseitig die Ringkammer (16) des roboterseitigen Kupplungsteils (6). Die Ringkammer (16) besitzt mehrere Aufnahmeöffnungen (10) in Form von kreisrunden Bohrungen in der Kammerwand, in denen die Kugeln (8) querbeweglich geführt sind. Die Aufnahmeöffnungen (10) und die Kugeln (8) haben im wesentlichen den gleichen Durchmesser. Der Flansch (29) des werkzeugseitigen Kupplungsteils (5) besitzt korrespondierende Aufnahmeöffnungen (9), die in Kupplungsstellung mit den roboterseitigen Aufnahmeöffnungen (10) fluchten.

Der Kolben (11) hat an seinem Mantel (12) mehrere in Umfangsrichtung voneinander distanziert angeordnete Ausnehmungen (20) für die Sperrelemente (8). Die Ausnehmungen (20) sind in einer solchen Höhe angebracht, daß sie in Lösestellung den Aufnahmeöffnungen (9,10) gegenüberliegen und in Sperrstellung von diesen distanziert sind.

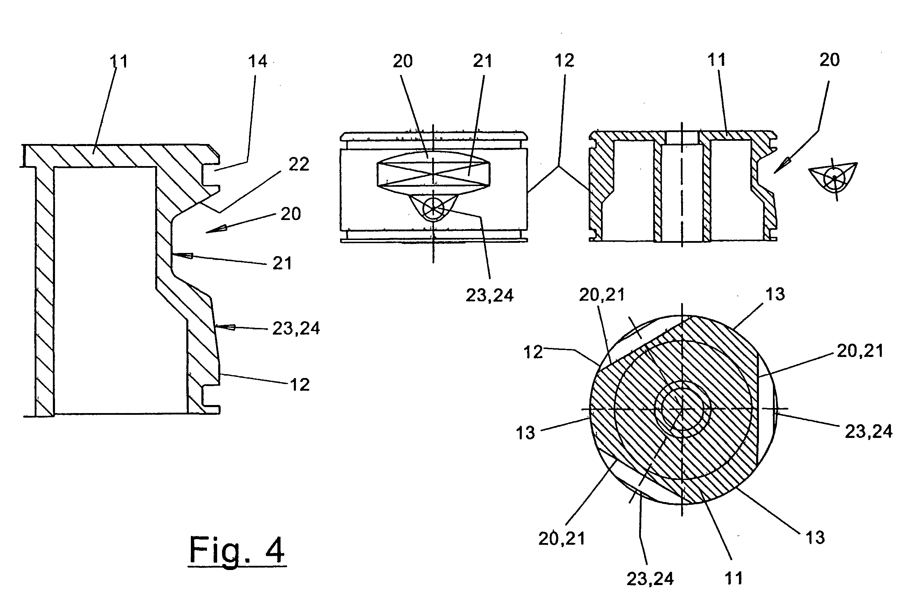

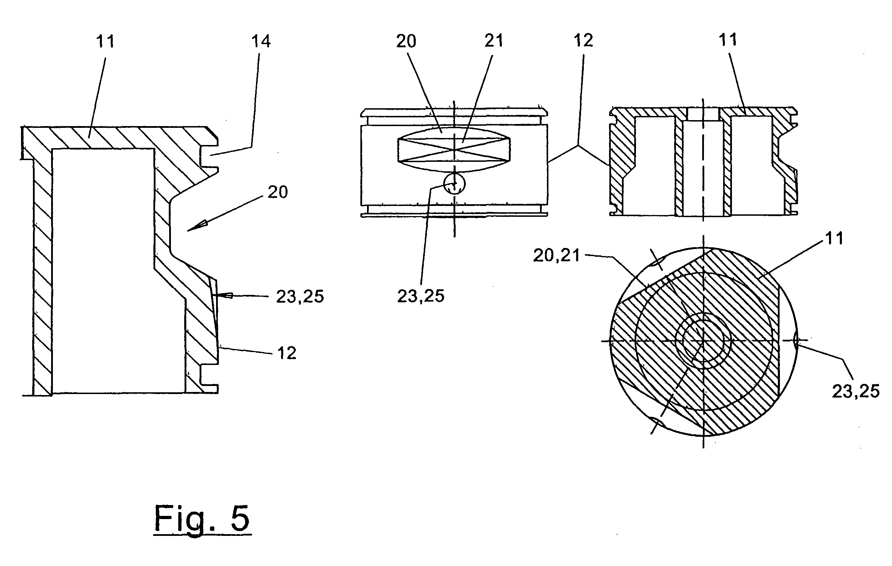

Wie aus Figur 4 und 5 im Detail hervorgeht, sind beispielsweise drei Kugeln (8) und drei Ausnehmungen (20) am Kolben (11) vorhanden, die gleichmäßig über den Umfang verteilt angeordnet sind. Zwischen den Ausnehmungen (20) bleiben die eingangs erwähnten Führungsflächen (13) bestehen, an denen der Kolben (11) über seine ganze Länge ohne Unterbrechung (mit Ausnahme der Dichtungen (14)) im Zylinder (15) geführt ist.

Die Ausnehmungen (20) können unterschiedlich ausgebildet sein. Im bevorzugten Ausführungsbeispiel sind sie als sekantenförmige Abflachungen (21) gestaltet. Durch ihren flachen Boden bieten diese z. B. als Abfräsung hergestellten Abflachungen (21) eine ebene Anlagefläche für die Kinematik der Kugeln bei der Bewegung zwischen Sperr- und Lösestellung besonders günstig ist. Alternativ können die Abflachungen (21) aber auch etwas gewölbt sein. Im Querschnitt haben die Ausnehmungen (20) die Form einer wannenförmigen Nut mit schrägen Leitflächen (22) an der Ober- und Unterseite, die die Kugeln (8) zu den Aufnahmeöffnungen (9,10) hin lenken.

Unterhalb der Ausnehmungen (20) und zentrisch zu diesen angeordnet befindet sich jeweils eine Anschrägung (23) am Mantel (12), die von den Aufnahmeöffnungen (9,10) weg geneigt ist. Die Anschrägungen (23) verlaufen außerdem schräg zu den Ausnehmungen (20) hin. Durch ihre Neigung üben sie eine zu den Aufnahmeöffnungen (9,10) gerichtete Spannkraft auf die Kugeln (8) aus, wenn sich der Kolben (11) aus der Lösestellung in die Sperrstellung bewegt.

Figur 4 und 5 zeigen unterschiedliche Ausführungsformen der Anschrägungen (23). In Figur 4 ist die Anschrägung (23) ebenfalls als sekantenförmige Abflachung (24) am runden Mantel (12) ausgebildet. In der Variante von Figur 5 hat die Anschrägung (23) die Form einer vertikalen und längs der Kolbenachse (26) verlaufenden Rinne (25).

Alternativ kann es sich auch um eine entsprechend geneigte wannen- oder kugelabschnittsförmige Vertiefung handeln. Hierdurch kann eine gewisse Zentrierfunktion für den Kolben (11) erfolgen.

Figur 2 und 3 verdeutlichen die verschiedenen Positionen der Verriegelung (7). In der Sperrstellung von Figur 2 ist der Kolben (11) nach oben zum roboterseitigen Kupplungsteil (6) gewandert. Dadurch kommen seine Ausnehmungen (20) oberhalb der Aufnahmeöffnungen (9,10) in den Kupplungsteilen (5,6) zu liegen. Mit dem darunterliegenden Mantelbereich und insbesondere den Anschrägungen (23) werden die Kugeln (8) in Sperrstellung zwischen die beiden Aufnahmeöffnungen (9,10) gedrückt und dort gehalten. Die Kugeln (8) befinden sich dabei jeweils ungefähr zur Hälfte in der einen werkzeugseitigen Aufnahmeöffnung (9) und der anderen roboterseitigen Aufnahmeöffnung (10). In dieser Stellung sind die Kupplungsteile (5,6) entlang der Kolbenachse (26) gegenseitig formschlüssig verriegelt. Die Kolbenachse (26) fällt hierbei mit der Handachse des Roboters (3) zusammen.

In der Lösestellung von Figur 3 ist der Kolben (11) nach unten gewandert und liegt mit seinen Ausnehmungen (20) gegenüber den Aufnahmeöffnungen (9,10). Hierdurch können die Kugeln (8) sich aus der werkzeugseitigen Aufnahmeöffnung (9) lösen und durch die roboterseitige Aufnahmeöffnung (10) in die Ausnehmung (20) wandern. In dieser Position können die Kupplungsteile (5,6) voneinander gelöst werden.

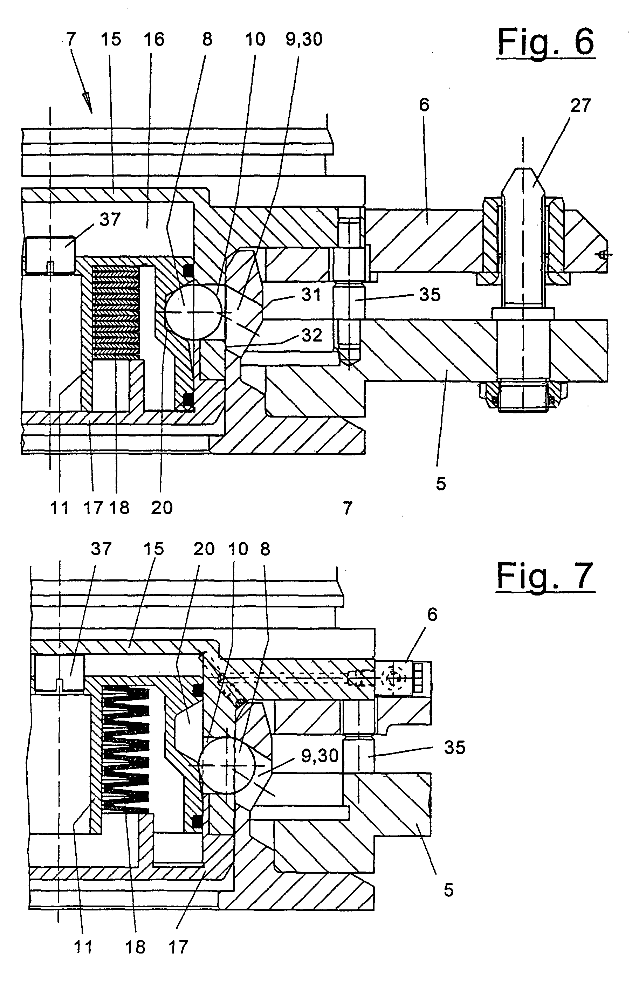

Figur 6 bis 10 zeigen die Gestaltung der außenliegenden Aufnahmeöffnungen (9) im Flansch (29). Bei der gezeigten Ausführungsform gehört dieser Flansch (29) zum werkzeugseitigen Kupplungsteil (5) und umgreift außenseitig die Ringkammer (16) mit dem Kolben (11). In einer anderen Ausführungsform kann die Kupplungsteilzuordnung oder die Außen/Innenlage von Ringkammer (16) und Flansch (29) allerdings vertauscht sein. Figur 6 zeigt die Wechselkupplung (1) in Sperrstellung. Figur 7 verdeutlicht die Öffnungsstellung.

Die Aufnahmeöffnung (9) ist hier als ein im wesentlichen zylindrischer Kugelkanal (30) ausgebildet, der eine schräge Kanalachse (31) aufweist. Die Kanalachse (31) ist von der roboterseitigen Aufnahmeöffnung (10) zur Werkzeugseite (2) hin schräg nach außen geneigt. Figur 6 und 7 verdeutlichen diese Ausrichtung.

Die Zahl der Kugelkanäle (30) entspricht der Zahl der Sperrelemente (8), die hier als Kugeln ausgebildet sind. Die Kugelkanäle (30) sind als Durchgangsbohrungen ausgeführt und vorn und hinten offen. Sie haben an ihrer zum Kolben (11) gelegenen Mündung an der Innenseite des Flansches (29) durch den Winkel zwischen der schrägen Kanalachse (31) und der geraden Flanschfront eine elliptische Form.

Durch die schräge Kanalachse (31) und die elliptische Mündungsform ergibt sich außerdem am Übergang zwischen dem Kugelkanal (30) und der roboterseitigen Aufnahmeöffnung (10) eine zurückspringende Stufe (32). Diese Stufe liegt in Richtung zur Werkzeugseite (2) hin unterhalb der Aufnahmeöffnung (10). Auf der gegenüberliegenden Seite stoßen die oben liegende Wand der Aufnahmeöffnung (10) und die obere Wand des Kugelkanals (30) in etwa bündig aneinander. Die Kugeln (8) können durch diese Gestaltung in Sperrstellung nur ein kleines Stück in den Kugelkanal (30) hineinragen. Sie können aber nicht aus dem Kugelkanal (30) herausfallen.

Die Aufnahmeöffnung (10) und der Kugelkanal (30) haben im wesentlichen den gleichen Durchmesser wie die Sperrkugeln (8). Die Durchmesserunterschiede sind gerade so groß, daß sich die Sperrkugel (8) in den Öffnungen (9,10,30) bewegen kann.

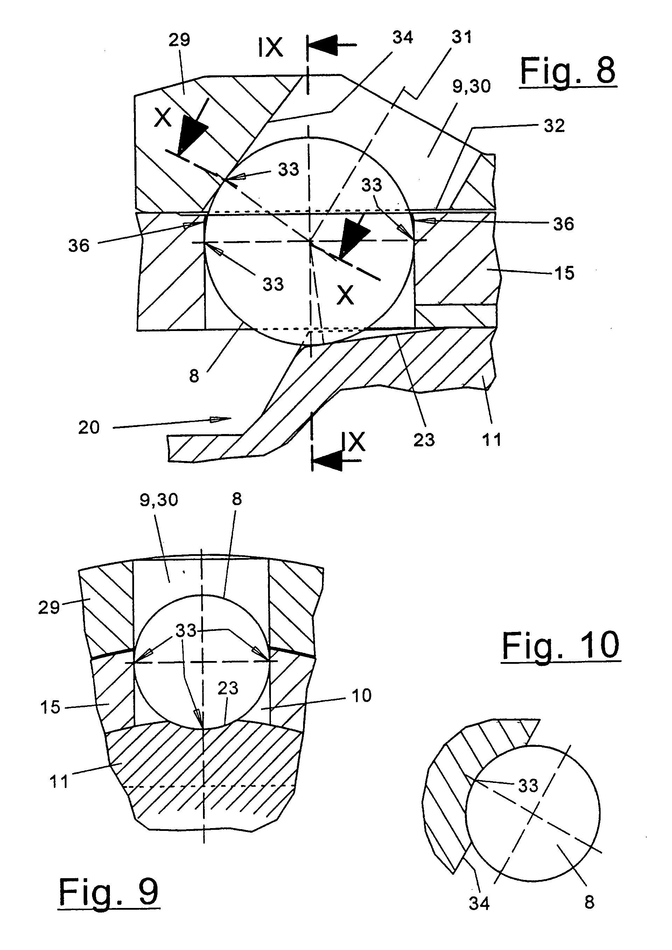

Wie Figur 8 verdeutlicht, liegt die Sperrkugel (8) in der Sperrstellung der Wechselkupplung (1) mit drei verteilten Berührungsstellen (33) am Kugelkanal (30), der Aufnahmeöffnung (10) und dem Kolben (11) an. Figur 9 und 10 zeigen diese Konstellation in Schnittbildern entlang der Schnittlinien IX-IX und X-X von Figur 8.

Durch seine schräge Lage drückt der Kugelkanal (30) mit seiner zur Roboterseite (3) hinweisenden Kanalwand (34) von oben auf die Sperrkugel (8) und preßt diese mit einer schrägen Kraftkomponente gezielt gegen die gegenüberliegende Unterwand der Aufnahmeöffnung (10) und gegen den Kolben (11) bzw. dessen Anschrägung (23). An den Kontaktstellen (33) besteht dabei eine Linienberührung.

Durch die Linienberührung ist die Kugel (8) in der Sperrstellung an den drei verteilt angeordneten Kontaktstellen (33) eingespannt und exakt geführt. Die Spann- und Sperrkräfte der Wechselkupplung (1) werden dadurch exakt übertragen. Durch die Stufe (32) hat die Kugel (8) im Kugelkanal (30) nur Kontakt mit der oberen Kanalwand (34) und gelangt nicht in Berührung mit der gegenüberliegenden unteren Kanalwand. Die über das Werkzeug (2) eingeleiteten Kräfte werden dadurch über die Kugel (8) direkt auf die untere Kontaktstelle (33) und auf die Aufnahmeöffnung (10) am roboterseitigen Kupplungsteil (6) übertragen. Ein Spiel wird hierbei weitgehend verhindert. Die Anschrägung (23) am Kolben (11) spannt diese Kugelstellung mit den Kontaktstellen (33) und nimmt eventuelle Toleranzen oder Verschleiß an den beteiligten Bauteilen auf. Durch die Linienberührung an den Kontaktstellen (33) ist eine gleichmäßige Belastung und eine verbesserte Führung der beteiligten Bauteile gewährleistet.

Die Sperrelemente (8) werden in der Aufnahmeöffnung (10) durch eine geeignete Rausfallsicherung (36) gehalten. Diese besteht z.B. aus ein oder mehreren Sicherungsnasen an dem zur Aufnahmeöffnung (9) benachbarten Öffnungsrand. Die einwärts gebogenen Sicherungsnasen verengen die Öffnungsmündung und halten die Sperrelemente (8) zurück. Figur 8 zeigt diese Ausbildung.

An den Kupplungsteilen (5,6) können Zentrierstifte (27) zum Suchen und Einhalten der richtigen Drehstellung beim Ankuppeln angeordnet sein. Über Einstellschrauben (37) am Kolbenboden wird die Kolbenstellung und die Vorspannung der Federn (18) eingestellt. Außerdem können ein oder mehrere Drehanschlüsse für die Übertragung von Betriebsmitteln, wie Strom, Druckluft, Kühlflüssigkeit, Hydrauliköl etc., vom Roboter (3) zum Werkzeug (2) vorhanden sein. Außerdem können die Kupplungsteile (5,6) geeignete Anschläge, Distanzelemente, etc. besitzen.

Abwandlungen der gezeigten Ausführungsform sind in verschiedener Weise möglich. Statt des gezeigten innengeführten Kolbens (11) kann ein außenseitiger hülsenförmiger Kolben vorhanden sein. Die Druckmittelbetätigung kann alternativ nur auf einer Seite erfolgen. Die Zuordnung von Flansch (29) und Ringkammer (16) kann vertauscht sein, wobei der Flansch (29) innenseitig zu liegen kommt. Dementsprechend sind dann auch die Aufnahmeöffnungen (9,10) und der Kugelkanal (30) in ihrer Ausbildung, Zuordnung und Funktion angepaßt.

Variabel ist ferner die Form der Ausnehmungen (20) und der Anschrägungen (23). Anstelle von Kugeln können zudem andere geeignete Sperrelemente zum Einsatz kommen. Kolben und Zylinder können ferner eine andere als eine zylindrische Form besitzen. Die Zahl und Anordnung der Sperrelemente (9) läßt sich ebenfalls variieren, wobei sie auch nicht auf einer Höhe liegen müssen.

### BEZUGSZEICHENLISTE

- 1: Wechselkupplung
- 2: Werkzeug, Werkzeugseite
- 3: Manipulator, Roboter, Roboterseite
- 4: Hand
- 5: Kupplungsteil, Werkzeug
- 6: Kupplungsteil, Roboter
- 7: Verriegelung
- 8: Sperrelement, Kugel
- 9: Aufnahmeöffnung (Werkzeug)
- 10: Aufnahmeöffnung (Roboter)
- 11: Kolben
- 12: Mantel
- 13: Führungsfläche
- 14: Dichtung
- 15: Zylinder
- 16: Ringkammer
- 17: Einsatz
- 18: Feder
- 19: Druckluftanschluß
- 20: Ausnehmung, Nut
- 21: Abflachung, Sekante
- 22: Leitfläche
- 23: Anschrägung
- 24: Abflachung, Sekante
- 25: Rinne
- 26: Kolbenachse
- 27: Zentrierstift
- 28: Drehanschluß
- 29: Flansch
- 30: Kugelkanal
- 31: Kanalachse
- 32: Stufe
- 33: Kontaktstelle
- 34: Kanalwand
- 35: Positionierkontakt
- 36: Rausfallsicherung, Sicherungsnase
- 37: Einstellschraube

## Patentansprüche

1. Wechselkupplung zur lösbaren Befestigung von Werkzeugen (2) an Manipulatoren (3), bestehend aus zwei Kupplungsteilen (5,6) und einer formschlüssigen Verriegelung (7), wobei die Verriegelung (7) mehrere bewegliche, rollfähige Sperrelemente (8), einen dem ersten Kupplungsteil (6) zugeordneten Zylinder (15) mit Kolben (11) zur Betätigung der Sperrelemente (8) und korrespondierende Aufnahmeöffnungen (9,10) in den Kupplungsteilen (5,6) aufweist, **dadurch gekennzeichnet, daß** die Aufnahmeöffnungen (9) am zweiten Kupplungsteil (5) als im wesentlichen zylindrische Kugelkanäle (30) ausgebildet sind, die eine schräg zu den Aufnahmeöffnungen (10) im ersten Kupplungsteil (6) verlaufende Kanalachse (31) aufweisen.

2. Wechselkupplung nach Anspruch 1, **dadurch gekennzeichnet, daß** die Kanalachse (31) von der roboterseitigen Aufnahmeöffnungen (10) zur Werkzeugseite (2) hin geneigt ist.

3. Wechselkupplung nach Anspruch 1 oder 2, **dadurch gekennzeichnet, daß** die Kugelkanäle (30) an der Mündung eine zurückspringende Stufe (32) zur roboterseitigen Aufnahmeöffnung (10) aufweisen.

4. Wechselkupplung nach Anspruch 1, 2 oder 3, **dadurch gekennzeichnet, daß** die Durchmesser der roboterseitigen Aufnahmeöffnungen (10), der Kugelkanäle (30) und der Sperrkugeln (8) im wesentlichen gleich sind.

5. Wechselkupplung nach Anspruch 1 oder einem der folgenden, **dadurch gekennzeichnet, daß** die Sperrkugeln (8) in Sperrstellung drei Kontaktstellen (33) an der schrägen Kanalwand (34), der roboterseitigen Aufnahmeöffnung (10) und dem Kolben (11) haben.

6. Wechselkupplung nach Anspruch 1 oder einem der folgenden, **dadurch gekennzeichnet, daß** der Kolben (11) am Mantel (12) mehrere in Umfangsrichtung voneinander distanziert angeordnete Ausnehmungen (20) für die Sperrelemente (8) aufweist.

7. Wechselkupplung nach Anspruch 6, **dadurch gekennzeichnet, daß** die Ausnehmungen (20) als sekantenförmige Abflachungen (21) ausgebildet sind.

8. Wechselkupplung nach Anspruch 6 oder 7, **dadurch gekennzeichnet, daß** drei Ausnehmungen (20) im Kreis gleichmäßig verteilt an der Außenseite des Kolbens (11) angeordnet sind.

9. Wechselkupplung nach Anspruch 6, 7 oder 8, **dadurch gekennzeichnet, daß** unterhalb der Ausnehmungen (20) jeweils eine von den Aufnahmeöffnungen (9,10) weggeneigte Anschrägung (23) angeordnet ist.

10. Wechselkupplung nach Anspruch 9, **dadurch gekennzeichnet, daß** die Anschrägung (23) als sekantenförmige Abflachung (24) ausgebildet ist.

11. Wechselkupplung nach Anspruch 9, **dadurch gekennzeichnet, daß** die Anschrägung (23) als Rinne (25) oder als kugelabschnittsförmige Vertiefung ausgebildet ist.

## Claims

1. Interchangeable coupling for the detachable fastening of tools (2) to manipulators (3), consisting of two coupling parts (5, 6) and a positive lock (7), the lock (7) having a plurality of movable, rollable locking elements (8), a cylinder (15) assigned to the first coupling part (6) and having a piston (11) for actuating the locking elements (8), and corresponding location openings (9, 10) in the coupling parts (5, 6), **characterized in that** the location openings (9) on the second coupling part (5) are designed as essentially cylindrical ball passages (30) which have a passage axis (31) running at an angle to the location openings (10) in the first coupling part (6).

2. Interchangeable coupling according to Claim 1, **characterized in that** the passage axis (31) is inclined from the robot-side location openings (10) towards the tool side (2).

3. Interchangeable coupling according to Claim 1 or 2, **characterized in that** the ball passages (30), at the orifice, have a set-back step (32) towards the robot-side location opening (10).

4. Interchangeable coupling according to Claim 1, 2 or 3, **characterized in that** the diameters of the robot-side location openings (10), of the ball passages (30) and of the locking balls (8) are essentially the same.

5. Interchangeable coupling according to Claim 1 or one of the following claims, **characterized in that** the locking balls (8), in the locking position, have three contact points (33) on the angled passage wall (34), the robot-side location opening (10) and the piston (11).

6. Interchangeable coupling according to Claim 1 or one of the following claims, **characterized in that** the piston (11), on the envelope (12), has a plurality of recesses (20) for the locking elements (8), the recesses (20) being arranged at a distance from one another in the circumferential direction.

7. Interchangeable coupling according to Claim 6, **characterized in that** the recesses (20) are designed as secant-shaped flats (21).

8. Interchangeable coupling according to Claim 6 or 7, **characterized in that** three recesses (20) are arranged so as to be distributed uniformly in a circle on the outside of the piston (11).

9. Interchangeable coupling according to Claim 6, 7 or 8, **characterized in that** a bevel (23) inclined away from the location openings (9, 10) is arranged in each case below the recesses (20).

10. Interchangeable coupling according to Claim 9, **characterized in that** the bevel (23) is designed as a secant-shaped flat (24).

11. Interchangeable coupling according to Claim 9, **characterized in that** the bevel (23) is designed as a channel (25) or as a spherical-segment-shaped depression.

## Revendications

1. Accouplement variable pour la fixation amovible d'outils (2) à des manipulateurs (3), constitué de deux pièces (5, 6) d'accouplement et d'un verrouillage (7) à complémentarité de forme, le verrouillage (7) comportant plusieurs éléments (8) de blocage mobile, pouvant rouler, un vérin (15) associé à la première pièce (16) d'accouplement et comportant des pistons (11) pour l'actionnement des éléments (8) de blocage et des ouvertures (9, 10) de réception correspondantes dans les pièces (5, 6) d'accouplement, **caractérisé en ce que** les ouvertures (9) de réception sur la deuxième pièce (5) d'accouplement sont réalisées en canaux (30) à billes sensiblement cylindriques, qui comportent un axe (31) de canal s'étendant en biais par rapport aux ouvertures (10) de réception dans la première pièce (6) d'accouplement.

2. Accouplement variable suivant la revendication 1, **caractérisé en ce que** l'axe (31) de canal est incliné des ouvertures (10) de réception côté robot en direction du côté (2) outil.

3. Accouplement variable suivant la revendication 1 ou 2, **caractérisé en ce que** les canaux (30) à billes comportent à l'embouchure un épaulement (32) en retrait par rapport à l'ouverture (10) de réception côté robot.

4. Accouplement variable suivant la revendication 1, 2 ou 3, **caractérisé en ce que** les diamètres des ouvertures (10) de réception côté robot, des canaux (30) à billes et des billes (8) de blocage sont sensiblement égaux.

5. Accouplement variable suivant la revendication 1 ou l'une des suivantes, **caractérisé en ce que** les billes (8) de blocage ont, en position de blocage, trois points (33) de contact avec la paroi (34) de canal en biais avec l'ouverture (10) de réception côté robot et avec le piston (11).

6. Accouplement variable suivant la revendication 1 ou l'une des suivantes, **caractérisé en ce que** le piston (11) comporte, sur la surface latérale (12), plusieurs évidements pour les éléments (8) de blocage ménagés à distance les uns des autres dans la direction périphérique.

7. Accouplement variable suivant la revendication 6, **caractérisé en ce que** les évidements (20) sont réalisés en méplats (21) en forme de sécante.

8. Accouplement variable suivant la revendication 6 ou 7, **caractérisé en ce que** trois évidements (20) sont ménagés dans le cercle en étant répartis uniformément sur la face extérieure du piston (11).

9. Accouplement variable suivant la revendication 6, 7 ou 8, **caractérisé en ce qu'**il est ménagé au dessous des évidements (20) respectivement une partie (23) oblique inclinée en s'éloignant des ouvertures (9, 10) de réception.

10. Accouplement variable suivant la revendication 9, **caractérisé en ce que** la partie (23) oblique est réalisée en méplat (24) en forme de sécante.

11. Accouplement variable suivant la revendication 9, **caractérisé en ce que** la partie (23) oblique est réalisée en rigole (25) ou en renfoncement en forme de calotte sphérique.
